# EUROPEAN PATENT SPECIFICATION

(11) **EP 0 931 462 B1**
(45) Date of publication and mention of the grant of the patent: **02.04.2003**
(21) Application number: 99101280.8
(22) Date of filing: 25.01.1999
(51) Int. Cl.: A23G 3/20, A23P 1/12, A23P 1/10, A23C 19/16

(54) **A process for the preparation of a chilled product**
Verfahren zur Herstellung gekühlter Waren
Procédé pour la fabrication de produits réfrigérés

(30) Priority: 27.01.1998 EP 98200220
(43) Date of publication of application: 28.07.1999
(73) Proprietor: SOCIETE DES PRODUITS NESTLE S.A., 1800 Vevey (CH)
(72) Inventor: Graham, Judith Anne, 81735 München (DE); Koller, Claudia, 84453 Muehldorf (DE); Redel, Martin, 84453 Muehldorf (DE); Weinlaeder, Arnd, 84453 Muehldorf (DE)
(74) Representative: Andrae, Steffen, Dr.

(56) References cited:
- EP-A- 0 770 332
- GB-A- 1 481 177
- GB-A- 1 510 413
- US-A- 4 229 484
- US-A- 4 659 580
- US-A- 4 812 318
- PATENT ABSTRACTS OF JAPAN vol. 018, no. 170 (C-1182), 23 March 1994 -& JP 05 336886 A (FUJI OIL CO LTD), 21 December 1993

## Description

The invention concerns a process for the preparation of a chilled product comprising a filling and a coating.

The preparation of a product comprising a filling and a coating is already known in the confectionery area. This preparation can be based on the "one shot technology" as it is described in US Patent No 1,711,750 or in GB 1 481 177, GB 1 510 413 or the related US Patent No. 4,299,484, the latter describing the preparation of center filled bars of confectionery having a shell of chocolate or, for example, toffee, fudge, fondant creme, jelly or butterscotch. Suitable filling materials are chocolate, fudge, nougat and certain gelatine-based confections. These confectionery products have low water activities a_{w} (lower than 0,80) and hence problems of microbial contaminants rarely arise. Such problems, however, arise if it is desired to produce products which have a higher water activity.

The aim of the present invention is to provide a process which can be implemented with products having a high water activity, that is products which have to be kept under chilled conditions.

The present invention concerns a process for the preparation of a chilled product comprising (i) a filling having a water activity between 0.85 and 0.99, and (ii) a fat-based coating, the process comprising:
a) disposing the filling and the coating each in a separate hopper, the filling being disposed at a temperature of from 0 to 30°C and the coating being disposed at a temperature of from 15 to 60°C,
b) separately dosing the filling and the coating each into a separate piston chamber,
c) simultaneously feeding the coating from its chamber to the outer conduit of a concentric nozzle, and feeding the filling from its chamber to the central conduit of the nozzle,
d) first dosing the coating, then the coating and the filling together and finally the coating into a mould, the formed product being still in the mould subjected to a temperature in the range of about 4 to 16°C, and
e) repeating the process for preparing a further chilled product.

For the implementation of the process according to the invention, a one-shot machine which fulfills the requirements for the productions of a chilled product may be used. The machine can be used per se, but the dosing means has to be redesigned to improve its cleanability and sanitation so that the machine can be wet cleaned and sanitized.

The chilled products obtained normally have a shelf life of around 6 weeks under chilled conditions, that is kept in a fridge at a temperature of around 4 to 12 °C. These products have for the filling a water activity comprised between 0.85 and 0.99. Preferably, these products have a filling with a water activity comprised between 0.95 and 0.99. The water activity is measured according to a technique known in the art, for example with a Decagon device.

The filling is the critical component concerning the shelf life. This filling may be a milk- or water- or fruit-based component, which is whipped or unwhipped. This milk-based component is selected in the group consisting of fermented milk products and other milk-based products . Under fermented milk products, we understand for example fresh cheese, yoghurt or a mix containing the aforementioned products. Under other milk-based products, we understand a milk- or milk powder- or milk concentrate-containing product, for example a mousse, a cream dessert, a pudding or an acidified milk product. Under water-based component, we understand a composition comprising for example a mixture of water, sugar, flavours , coloring agents and texture and structure providing ingredients, for example a water jelly. Under fruit-based component, we understand a composition comprising for example a mixture of fruit or fruit concentrate or fruit preparation, water, sugar, flavours, coloring agents and texture and structure providing ingredients, for example fruit purée.

Due to hygienic reasons, the filling preferably has an acidic pH of 3 to 4.5. It is also possible to have a filling with a neutral pH, for example a mousse or a cream dessert. The fillings used are produced with standard procedures.

The coating is a fat-based product, for example chocolate or a product containing at least 10 % of fat (said fat being a single fat or a mixture of different fats).

When the chilled product is in the mould, it is subjected directly to a temperature of around 4-16 °C, already on the production line. It is possible to have several nozzles producing the chilled product the number of the nozzles is not critical.

The specificity of the invention is to dose simultaneously the filling and the coating into a mould. The coating is dosed via the outer conduit of a concentric nozzle whilst the filling is deposited down the inner conduit of the nozzle. The dosing sequence requires the coating to be deposited first, followed after a set time by the filling. The filling and the coating are deposited together and form a centre of filling surrounded by the coating. After a further selected time, the depositing of the filling stops and the coating completes the shell.

The advantage of the one shot technology is that it offers the possibility to manufacture a product which is entirely surrounded by a coating (shell) which is dosed simultaneously with the filling . This minimizes the risk of recontamination of the filling as the filling is protected against environmental influences from the beginning of the process. The mould where is dosed in, could either consist of plastic or metal or could be cereal-based, such as dough or batter. In the case of a cereal-based mould, the mould would be the outer layer of the product which could be eaten.

On the production line, the product is then either pushed out of the mould and filled in a pouch, wherein it is possible to enclose ten or twenty of these products or directly put in a pouch with the mould with the above mentioned number of products . The pouch is then sealed and ready to be placed in the fridge.

Any micro-organisms in the fat-based coating alone will not grow due to the low water activity. In the present case, a dairy product is used as filling (having a high water activity value) together with the coating (for example chocolate). So, if the coating is not heat-treated before its use in the chilled product , micro-organisms could grow at the interface between the chocolate and the filling or on the outside of the chocolate shell due to water droplets forming during storage. If a dairy filling with a low pH value is being filled, it is sufficient to pasteurize the coating. The coating is heat-treated before it is fed in the hopper.

The dairy filling can also be heat-treated before the feeding in the hopper. This heat-treatment is either a pasteurisation or a sterilisation.

In the hopper, the temperature of the coating is adjusted such that the coating is sufficiently flowable to reach the nozzle. This temperature is 15 to 60 °C, preferably 20 to 45 °C and most preferably 26 to 30 °C. Concerning the dairy filling, it is maintained in the hopper at a temperature of 0 to 30 °C, preferably 10 to 15°C.

The "one-shot" machine for the implementation of the process according to the invention is illustrated in the following figure, showing schematically how it operates.

A dairy filling (1) which has been pasteurised is fed into a hopper (2), where it is kept at a temperature of around 16 °C. A fat-based coating (3), after being pasteurised, is fed into a hopper (4) and kept at a temperature of around 28 °C. Both hoppers are disposed in an enclosure (5) for maintaining the appropriate temperature : moreover, each hopper is separated from the other by a wall (6). A piston (7) draws the filling into a chamber (8) and a piston (9) draws the coating into a chamber (10). The pipes (11), (12) connect each hopper (1,4) to the corresponding chamber (8,10). A dosing nozzle (13) receives the charges of filling and coating. A conveying belt (14) is disposed below the nozzle (13) and feeds the moulds (15) with the chilled product (16).

This "one shot machine " operates as described hereunder :
The filling (1) and the coating (3) in their corresponding hoppers at the prescribed temperature are ready for the process, the different heat-treatments having been made. The piston (7) moves outward along arrow A and draws a quantity of filling for one product. The same occurs for the coating with piston (9) moving outward along arrow B. The pipes (11) and (12) then rotate downwards according to arrows C and D and are then in a position to be fed to the nozzle (13) by inward movement of the pistons (7) and (9): the filling being fed into the centre of the nozzle and the coating being fed into the periphery of the nozzle. The dosing in the mould (15) is then made by moving downwards the whole machine along the arrow F and the pipes (11) and (12) move upwards to their original position. Another dosing can then start again.

The description is now made in relation with an example.

### Example : Fresh cheese

A chilled product is prepared according to the process described hereabove. The filling used has following composition :

| | |
|---|---|
| Curd | 52.9 % |
| Cream | 20.5 % |
| Sugar | 15 % |
| Fruit preparation | 8.5 % |
| Skimmed milk powder | 2.5 % |
| Gelatine | 0.6 % |

The coating has following composition :

| | |
|---|---|
| Sugar | 41 % |
| Milk powder | 29 % |
| Lactose | 5 % |
| Cacao butter | 24 % |
| Lecithin | 0.7 % |
| Flavour | 0.3 % |

The obtained product can be kept in the fridge for 6 weeks, without any microbiological growth and preserving satisfying organoleptic properties.

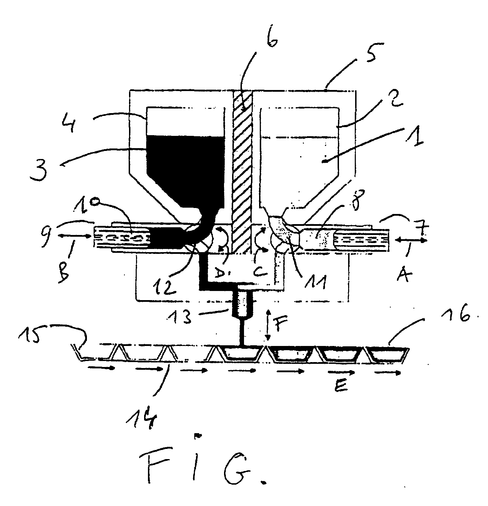

## Claims

1. A process for the preparation of a chilled product comprising (i) a filling having a water activity between 0.85 and 0.99, and (ii) a fat-based coating, the process comprising:
a) disposing the filling and the coating each in a separate hopper, the filling being disposed at a temperature of from 0 to 30°C and the coating being disposed at a temperature of from 15 to 60°C,
b) separately dosing the filling and the coating each into a separate piston chamber,
c) simultaneously feeding the coating from its chamber to the outer conduit of a concentric nozzle, and feeding the filling from its chamber to the central conduit of the nozzle,
d) first dosing the coating, then the coating and the filling together and finally the coating into a mould, the formed product being still in the mould subjected to a temperature in the range of about 4 to 16°C, and
e) repeating the process for preparing a further chilled product.

2. A process according to claim 1, wherein the filling is selected from the group consisting of a milk-, water- and fruit-based component, which component is whipped or unwhipped.

3. A process according to claim 2, wherein the milk-based component is selected from the group consisting of fermented milk products and other milk-based products.

4. A process according to any of claims 1 to 3, wherein the filling has a pH of from 3 to 4.5.

5. A process according to any of claims 1 to 4, wherein the coating and the filling are heat-treated prior to step a).

6. A process according to any of claims 1 to 5, wherein the mould is selected from the group consisting of plastic-, metal- and cereal-based-moulds.

7. A process according to any of claims 1 to 6, wherein the filling has a water activity of between 0.95 and 0.99.

8. A process according to any of claims 1 to 7, wherein in step a) the coating is disposed at a temperature of from 20 to 45°C, preferably 26 to 30°C, and the filling is disposed at a temperature of from 10 to 15°C.

## Patentansprüche

1. Verfahren zur Herstellung eines gekühlten Produkts, das (i) eine Füllung mit einer Wasseraktivität zwischen 0,85 und 0,99 und (ii) einen Überzug auf Fettbasis aufweist, wobei das Verfahren umfaßt:
a) Bereitstellen der Füllung und des Überzugs jeweils in einem separaten Zuführtrichter, wobei die Füllung bei einer Temperatur von 0 bis 30°C bereitgestellt wird und der Überzug bei einer Temperatur von 15 bis 60°C bereitgestellt wird,
b) getrenntes Dosieren der Füllung und des Überzugs jeweils in eine separate Förderkolbenkammer,
c) gleichzeitiges Zuführen des Überzugs aus seiner Kammer zu der äußeren Förderleitung einer konzentrischen Düse, und Zuführen der Füllung aus ihrer Kammer zu der zentralen Förderleitung der Düse,
d) zuerst Eindosieren des Überzugs, dann gemeinsam des Überzugs und der Füllung und abschließend des Überzugs in eine Form, wobei das geformte Produkt noch in der Form einer Temperatur im Bereich von etwa 4 bis 16°C ausgesetzt wird, und
e) Wiederholen des Verfahrens zur Herstellung eines weiteren gekühlten Produkts.

2. Verfahren nach Anspruch 1, bei dem die Füllung aus der Gruppe ausgewählt ist, die besteht aus einer Komponente auf Milch-, Wasser- und Fruchtbasis, wobei die Komponente aufgeschlagen oder nicht-aufgeschlagen ist.

3. Verfahren nach Anspruch 2, wobei die Komponente auf Milchbasis aus der Gruppe ausgewählt ist, die besteht aus fermentierten Milchprodukten und anderen Produkten auf Milchbasis.

4. Verfahren nach irgendeinem der Ansprüche 1 bis 3, wobei die Füllung einen pH von 3 bis 4,5 aufweist.

5. Verfahren nach irgendeinem der Ansprüche 1 bis 4, wobei der Überzug und die Füllung vor Stufe a) wärmebehandelt werden.

6. Verfahren nach irgendeinem der Ansprüche 1 bis 5, wobei die Form aus der Gruppe ausgewählt ist, die besteht aus Formen auf Kunststoff-, Metall- und Getreideproduktbasis.

7. Verfahren nach irgendeinem der Ansprüche 1 bis 6, wobei die Füllung eine Wasseraktivität zwischen 0,95 und 0,99 aufweist.

8. Verfahren nach irgendeinem der Ansprüche 1 bis 7, wobei in Stufe a) der Überzug mit einer Temperatur von 20 bis 45°C, vorzugsweise 26 bis 30°C, bereitgestellt wird, und die Füllung bei einer Temperatur von 10 bis 15°C bereitgestellt wird.

## Revendications

1. Procédé pour la préparation d'un produit réfrigéré comprenant (i) une garniture ayant une activité d'eau comprise dans l'intervalle de 0,85 à 0,99, et (ii) un enrobage à base de matières grasses, procédé comprenant les étapes consistant à :
a) placer la garniture et l'enrobage chacun dans une trémie distincte, la garniture étant placée à une température comprise dans l'intervalle de 0 à 30°C et l'enrobage étant placé à une température comprise dans l'intervalle de 15 à 60°C,
b) à doser séparément la garniture et l'enrobage chacun dans une chambre à piston distincte,
c) simultanément à amener l'enrobage de sa chambre au conduit extérieur d'une buse concentrique, et amener la garniture de sa chambre au conduit central de la buse,
d) à doser tout d'abord l'enrobage, puis l'enrobage et la garniture ensemble et finalement l'enrobage dans un moule, le produit formé, encore dans le moule, étant soumis à une température comprise dans l'intervalle d'environ 4 à 16°C, et
e) à répéter le procédé pour la préparation d'un produit réfrigéré supplémentaire.

2. Procédé suivant la revendication 1, dans lequel la garniture est choisie dans le groupe consistant en un constituant à base de lait, un constituant à base d'eau et un constituant à base de fruits, constituant qui est fouetté ou non fouetté.

3. Procédé suivant la revendication 2, dans lequel le constituant à base de lait est choisi dans le groupe consistant en des produits laitiers fermentés et d'autres produits à base de lait.

4. Procédé suivant l'une quelconque des revendications 1 à 3, dans lequel la garniture a un pH de 3 à 4, 5.

5. Procédé suivant l'une quelconque des revendications 1 à 4, dans lequel l'enrobage et la garniture sont soumis à un traitement thermique avant l'étape a).

6. Procédé suivant l'une quelconque des revendications 1 à 5, dans lequel le moule est choisi dans le groupe consistant en des moules en matière plastique, des moules métalliques et des moules à base de céréales.

7. Procédé suivant l'une quelconque des revendications 1 à 6, dans lequel la garniture a une activité d'eau comprise dans l'intervalle de 0,95 à 0,99.

8. Procédé suivant l'une quelconque des revendications 1 à 7, dans lequel, dans l'étape a), l'enrobage est placé à une température comprise dans l'intervalle de 20 à 45°C, de préférence de 26 à 30°C et la garniture est placée à une température comprise dans l'intervalle de 10 à 15°C.
